# EUROPÄISCHE PATENTSCHRIFT

(11) **EP 0 645 874 B1**
(45) Veröffentlichungstag und Bekanntmachung des Hinweises auf die Patenterteilung: **07.05.1997**
(21) Anmeldenummer: 94114000.6
(22) Anmeldetag: 07.09.1994
(51) Int. Cl.: H02K 19/38

(54) **Erregerstromleitung im Rotor einer elektrischen Maschine**
Excitation current conduction in the rotor of an electrical machine
Conduit de courant d'excitation dans le rotor d'une machine électrique

(30) Priorität: 29.09.1993 DE 4333094
(43) Veröffentlichungstag der Anmeldung: 29.03.1995
(73) Patentinhaber: ASEA BROWN BOVERI AG, 5400 Baden (CH)
(72) Erfinder: Brem, Ernst, CH-8952 Schlieren (CH)

(56) Entgegenhaltungen:
- DE-A- 1 613 341
- DE-A- 2 519 941
- DE-A- 2 524 818
- US-A- 3 145 314

## Beschreibung

### TECHNISCHES GEBIET

Die Erfindung bezieht sich auf eine Erregerstromleitung in der zentralen Wellenbohrung im Rotor einer elektrischen Maschine, insbesondere Turbogenerator, zur Verbindung der zentral im Rotor axial verlaufenden paarweise angeordneten und mit einem Kühlkanal in Leiterlängsrichtung versehenen Erregerleiter mit den radial in der Rotorwelle angeordneten Stromzuführungsbolzen einerseits und einer auf einem Wellenstummel angeordneten Erregerstromquelle andererseits, welcher Wellenstummel am nichtantriebsseitigen Wellenende des Rotors mittels einer lösbaren Kupplung befestigt ist.

Die Erfindung nimmt dabei Bezug auf einen Stand der Technik, wie er sich beispielsweise aus der US-A-3,457,440 ergibt.

### TECHNOLOGISCHER HINTERGRUND UND STAND DER TECHNIK

Bei Turbogeneratoren erfolgt die Führung der Erregerleitungen am Rotor zur Rotorwicklung im allgemeinen in einer zentralen Wellenbohrung. Die Leiter in der Wellenbohrung sind meist massiv mit halbkreisförmigen Querschnitt und sind rundum und gegeneinander isoliert. Von diesen zentral geführten Massivleitern wird die Verbindung zur Rotorwicklung über radial in die Massivleiter eingeschraubte Stromzuführungsbolzen hergestellt. Diese wiederum sind mit der Erregerwicklung des Rotors verbunden.

Die Erregerleitung ist paarweise ausgebildet und verläuft unter dem nichtantriebsseitigen Lager hin zur Erregerstromquelle. Diese kann eine Schleifringanordnung sein. Die Stromquelle kann aber auch wie im Falle der eingangs zitierten US-A-3,457,440 eine rotierende Gleichrichteranordnung sein, die von einem rotierenden Transformator gespeist wird. Beide Arten von Erregerstromquellen werden nachfolgend kurz mit Erregeranordnung bezeichnet. Bei grossen elektrischen Maschinen ist die Erregeranordnung regelmässig mit der Hauptmaschine mittels einer lösbaren Kupplung verbunden.

In den Erregerleitern fliessen Erregerströme, die viele hundert Ampère betragen können. Darüber hinaus weisen die Erregerleiter bei grossen Turbogeneratoren eine beträchtliche Länge, meist mehrer Meter. Aus diesem Grunde sind grosse Erregerleiterquerschnitte nötig. Als optimal wurde es bislang angesehen, den Querschnitt so zu gestalten, dass beide Leiter sich zu einer Leiteranordnung mit kreisförmigem Querschnitt ergänzen. Das Kühlmittel (Gas oder eine Flüssigkeit) wird bei Maschinen mit flüssigkeitsgekühlter Erregerwicklung durch Kühlkanäle in der Erregerleitung zugeführt und durch separate Kanäle neben der zentralen Wellenbohrung wieder abgeführt. Bei gasgekühlten Maschinen erfolgt die Zufuhr des Kühlgases durch eine radiale Wellenbohrung, die mit dem Ausströmraum des Maschinenventilators in Verbindung steht. Das Kühlgas durchströmt die Kühlkanäle in den Erregerleitern und tritt am Stromzuführungsbolzen wieder aus dem Rotor aus.

Bei luftgekühlten Maschinen bietet diese Technologie keine Probleme. Eventuelle Leckagen beeinflussen allenfalls die Kühlwirkung. Völlig anders liegen die Verhältnisse hingegen bei Maschinen mit Wasserstoffkühlung, wobei der kritischste Bereich die Kupplung von Haupt- und Erregermaschine ist: Elektrische Isolation, Abstützung der Erregerleiter, Zerlegbarkeit und Gasdichtigkeit lassen sich bei der komplexen Geometrie der Erregerleiter nur durch aufwendige Massnahmen realisieren. Zudem sind derartige Erregerleitungen extrem teuer, weil es keine Normprofile sind.

### KURZE DARSTELLUNG DER ERFINDUNG

Ausgehend vom Bekannten liegt der Erfindung die Aufgabe zugrunde, eine Erregerleitung der eingangs genannten Gattung zu schaffen, die hinsichtlich elektrischer Isolation, Abstützung der Erregerleiter, Zerlegbarkeit und Gasdichtigkeit allen Betriebsanforderungen genügt.

Diese Aufgabe wird erfindungsgemäss dadurch gelöst, dass die kupplungsseitigen Enden der Erregerstromleiter mit kupplungsseitigen Anschlussstücken fest verbunden sind, dass besagte Anschlussstücke im wesentlichen kreisförmigen Querschnitt aufweisen und mit ihren Enden axial verlaufende Durchgangsbohrungen in einer Dichtplatte durchdringen und von dieser elektrisch isoliert sind, wobei die Dichtplatte im Bereich der Kupplung mit dem Wellenende verschraubt ist, und dass Mittel zur gasdichten Abdichtung der Dichtplatte gegenüber der Rotorwelle und gegenüber den die Dichtplatte durchdringenden Enden der kupplungsseitigen Anschlussstücke vorgesehen sind.

Eine bevorzugte Ausführungsform der Erfindung sieht vor, in der zentralen Wellenbohrung bolzenseitige Anschlussstücke vorzusehen, in welche besagte Stromzuführungsbolzen lösbar befestigt sind, dass die Erregerstromleiter als metallische Rohre mit kreisrundem Querschnitt ausgeführt und mit den bolzenseitigen Anschlussstücken fest verbunden sind, dass diese Rohre am anderen Ende mit massiven kupplungsseitigen Anschlussstücken fest verbunden sind, welche mit ihren Enden eine Dichtplatte durchdringen.

Der Erfindung liegt die Idee zugrunde, überall dort, wo es technisch notwendig und sinnvoll ist, die Dichtflächen geometrisch einfach zu gestalten, vorzugsweise also plane oder kreisrunde Dichtflächen zu schaffen. Weil nicht nur Massnahmen zur Abdichtung sondern auch elektrische Ioslierungen vorgesehen werden müssen, ergibt sich synergistisch eine Vereinfachung der Isolation, weil plane und kreisrunde Objekte einfacher zu isolieren sind als solche mit komplexer Geometrie. Ein weiterer Vorteil der Erfindung ist auch darin zu sehen, dass auch die Fertigung der jeweiligen Bauteile einfacher und wirtschaftliche ist und z.T. Normteile verwendet werden können.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig. 1: einen vereinfachten Längsschnitt durch das nichtantriebsseitige Ende eines Turbogenerators;
- Fig.1a: einen vergrösserten Querschnitt durch die Erregerleiter des Turbogenerators nach Fig.1;
- Fig.2: einen mehr ins Detail gehenden Längsschnitt durch die besagte Endpartie im Bereich der Stromzuleitungsbolzen bis hin zur Dichtplatte;
- Fig.2a: einen vergrösserten Querschnitt durch die Wellenbohrung nach Fig.2 längs deren Linie AA;
- Fig.3: einen vergrösserten Ausschnitt aus Fig.2;
- Fig.3a: einen vergrösserten Ausschnitt aus Fig.2 mit einer akternativen Ausführung der kupplungsseitigen Enden der Erregerstromleiter;
- Fig.4: eine Draufsicht auf die Dichtplatte;
- Fig.5: einen Schnitt durch das Uebergangsteil gemäss Fig.3 längs deren Linie BB;
- Fig.6: einen Längsschnitt durch die Wellenbohrung im Bereich der Dichtplatte bei einer Ausführungsvariante mit Erregerstromleitern mit halbkreisförmigen Querschnitt;
- Fig.7: einen Querschnitt durch den Uebergangsbereich von Errgerstromleitern zur Dichtplatte gemäss Fig.6 längs deren Linie CC.

### WEGE ZUR AUSFÜHRUNG DER ERFINDUNG

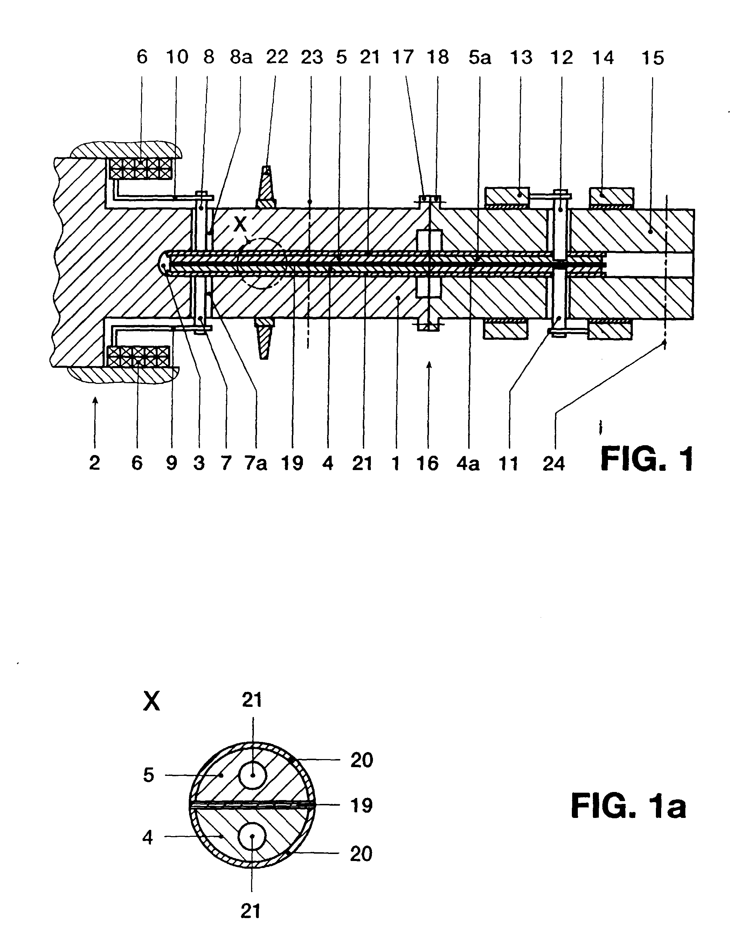

Bevor die Erfindung im einzelnen beschrieben wird, sei zunächst anhand der Fig.1, welche einen vereinfachten Längsschnitt durch das nichtantriebsseitige Ende eines gasgekühlten Turbogenerators zeigt, der übliche Aufbau einer derartigen Maschine beschrieben werden.

Die Welle 1 des Rotors 2 ist mit einer zentralen Bohrung 3 versehen. In dieser Bohrung 3 liegen paarweise die Erregerstromleiter 4, 5. Diese verbinden die Rotorwicklung 6 über radial angeordnete erste Zuleitungsbolzen 7, 8, die in radialen Wellenbohrungen 7a bzw. 8a verlaufen, und Verbindungsleiter 9, 10 über zweite Zuleitungsbolzen 11, 12, die gleichfalls in radialen Wellenbohrungen 11a bzw. 12a angeordnet sind, mit den beiden Schleifringen 13, 14 am nichtantriebsseitigen Wellenende. Die Schleifringe 13, 14 und die zweiten Zuleitungsbolzen sind auf einem Wellenstummel 15 angeordnet, der mittels einer lösbaren Kupplung 16 (mit Kupplungshälften 17, 18) mit der Rotorwelle 1 verbunden ist. Im Bereich dieser Kupplung 16 sind die Erregerstromleiter 4, 5 regelmässig getrennt, und es ist eine elektrische Kupplung (nicht eingezeichnet) vorgesehen. Die von der Kupplung 16 zu den zweiten Zuleitungsbolzen führenden Erregerstromleiter sind mit 4a bzw. 5a bezeichnet.

Die Erregerstromleiter 4, 5, 4a und 5a weisen bei bekannten Maschinen halbkreisförmigen Querschnitt auf und sind gegeneinander und gegenüber der Welle 1 bzw. dem Wellenstummel 15 elektrisch isoliert. Diese Isolation ist in Fig.1 bzw. dem Detailbild mit 19 bzw. 20, der in Leiterlängsrichtung verlaufende Kühlkanal in den Errgerstromleitern ist mit 21 bezeichnet.

Der Vollständigkeit halber ist in Fig.1 der Axialventialtor 22 eingezeichnet. Die Lagerstelle des Rotors durch die strichpunktierte Linie 23, diejenige des Wellenstummels durch die strichpunktierte Linie 24 symbolisiert. Bei wasserstoffgekühlten Maschinen liegt im Wellenabschnitt zwischen dem Ventilator 22 und der Kupplung 16 zudem eine Wellendichtung (nicht in Fig.1 eingezeichnet) zur gasdichten Trennung des unter Ueberdruck stehenden, wasserstoffgefüllten Maschineninneraumes von der Aussenwelt.

Wie bereits eingangs ausgeführt, sind die Erregerstromleiter 4, 5 bei grösseren und grossen Maschinen gekühlt. Zu diesem Zweck weisen die Erregerstromleiter einen in Leiterlängsrichtung verlaufenden Kühlkanal 21 auf (vgl. Detailbild X zu Fig.1). Die Zu- und/oder Abfuhr des durch die Bohrung strömenden Kühlgases kann dabei auf die verschiedenartigsten Weise erfolgen (vgl. US-A-2,286,871 oder US-A-3,393,333). Die dabei auftretenden Probleme im Zusammenhang mit der gasdichten Abdichtung der Erregerstromleiter sind jedoch überall dieselben.

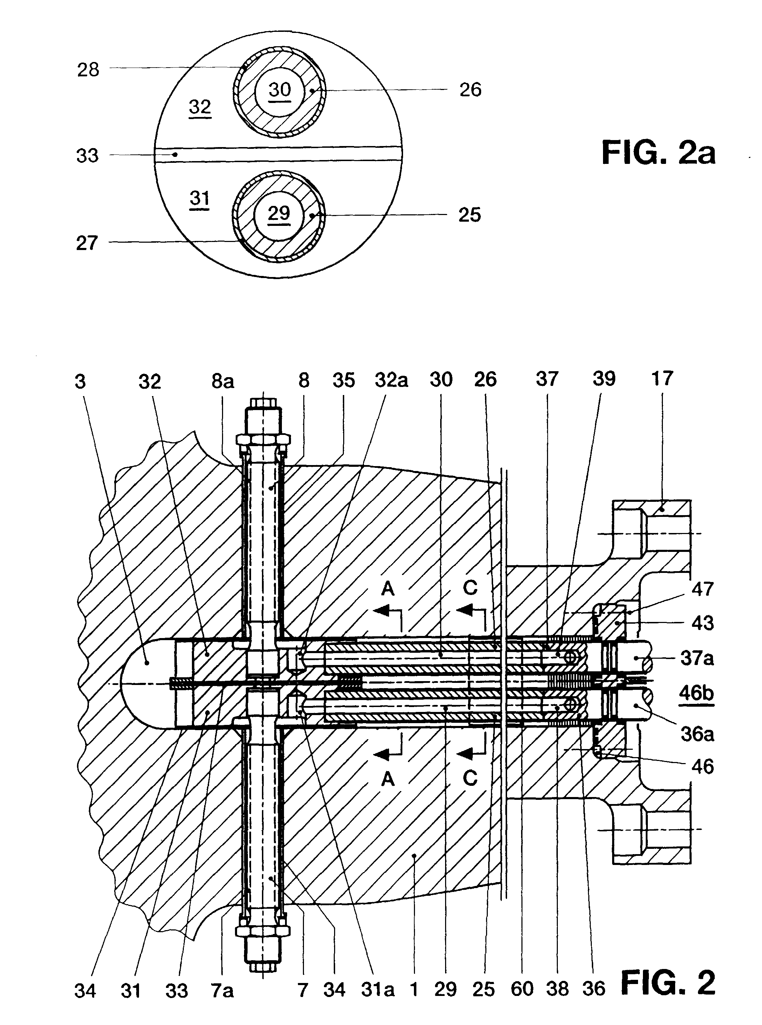

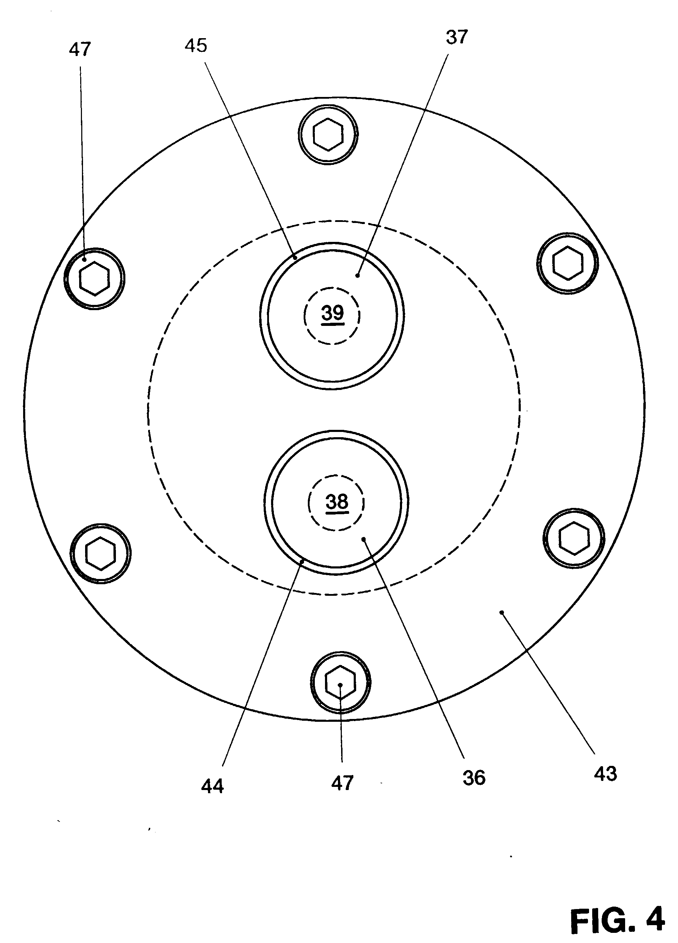

Hier setzt nun die Erfindung ein. Ihr liegt die Idee zugrunde, überall dort, wo es technisch notwendig und sinnvoll ist, die Dichtflächen geometrisch einfach zu gestalten, vorzugsweise also plane oder kreisrunde Dichtflächen zu schaffen und dabei möglichst weitgehend für die eigentlichen Erregerstromleitungen Normprofile zu verwenden. Eine nach diesen Gesichtspunkten ausgeführtes Ausführungsbeispiel ist in Fig.2 bis 5 beispielsweise weise veranschaulicht, wobei soweit möglich gleiche Teile wie in Fig.1 mit denselben Bezugszeichen versehen worden sind.

Die eigentlichen, meist mehrere Meter langen Erregerstromleitungen in der zentralen Wellenbohrung 9 bestehen aus Kupferrohren 25 und 26, die jeweils von einem dünnen Isolierrohr 27 bzw. 28 umgeben sind. Das Innere der Kupferrohre 25, 26 bildet die Kühlkanäle 29 und 30. Am bolzenseitigen Ende münden die Kupferrohre 25, 26 in bolzenseitige Anschlussstücke 31 bzw. 32 aus Stahl mit generell halbkreisförmigem Querschnitt und sind mit diesen hartverlötet. Eine Isolierplatte 33 dient zur elektrischen Isolierung der beiden auf unterschiedlichem Potential liegenden Anschlussstücke. Ein Isolierrohr 34 isoliert beide Anschlussstücke gegenüber der Welle 1. Die Anschlussstücke 31 und 32 sind mit radial verlaufenden Gewindebohrungen versehen, in welche die mit Gewinde versehenen Enden der Zuleitungsbolzen 7 bzw. 8 eingeschraubt sind. Dem gleich Zweck dienen Isolierrohre 34 und 35 in den radialen Wellenbohrungen, durch welche die Zuleitungsbolzen 7 und 8 nach aussen führen. Die Anschlussstücke sind ferner mit Bohrungen 31a bzw. 32a versehen, welche eine freie Verbindung zwischen den Kühlkanälen 29, 30 und dem Ringraum zwischen dem Schaft der Zuleitungsbolzen 7, 8 und den genannten Isolierrohren 34 bzw. 35 herstellen.

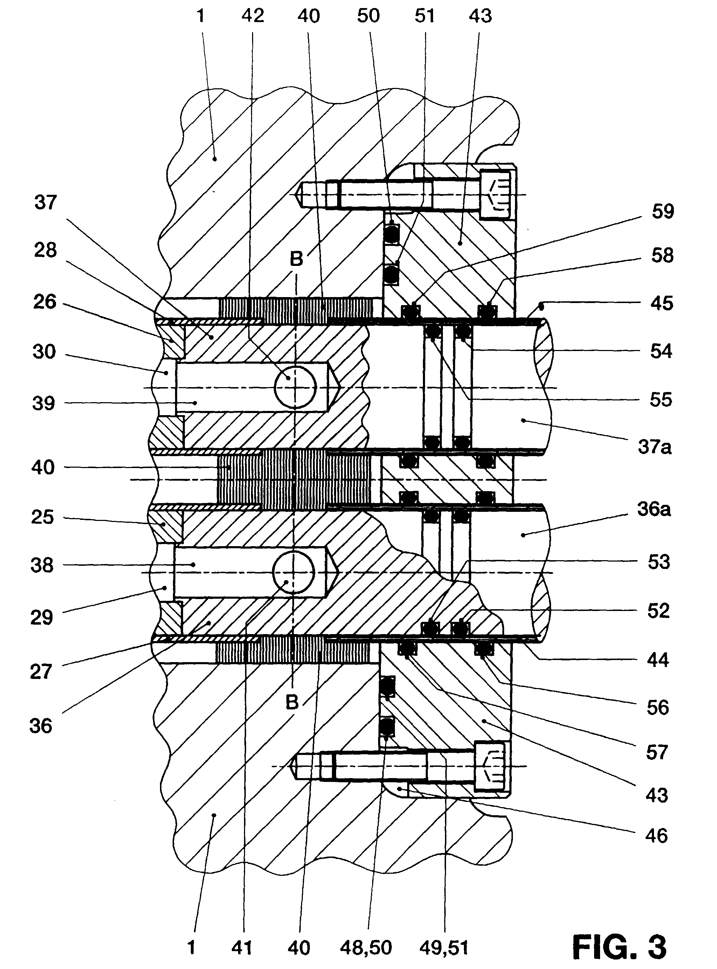

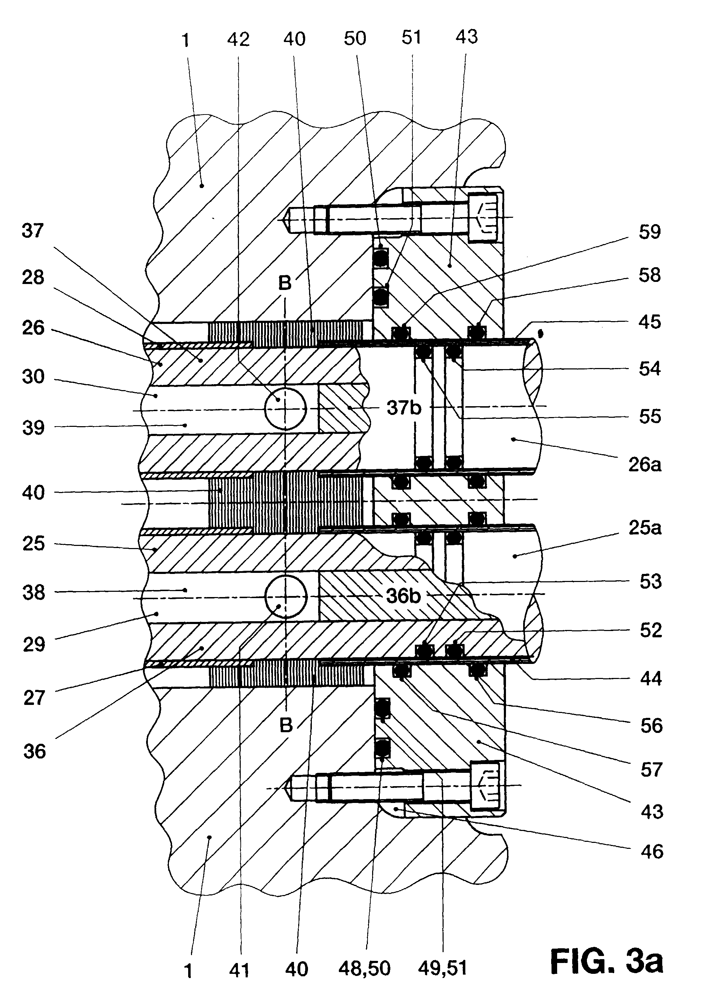

Fig.3 zeigt einen vergrösserten Längsschnitt durch die kupplungsseitige Endpartie der Erregerstromleitungen. Hier sind die Kupferrohre 25, 26 mit kupplungsseitigen Anschlüssstücken 36 bzw. 37 mit kreisrunden Querschnitt hartverlötet. Ihr Aussendurchmesser entspricht dem Aussendurchmesser der Kupferrohre 25 bzw. 26. Die Anschlussstücke 36, 37 sind mit einer gegen die Kupferrohre hin offenen Sacklochbohrung 38 bzw. 39 versehen. Diese bilden die Fortsetzung der Kühlkanäle 29 und 30. Die Anschlussstücke 36, 37 sind in einem Isolierkörper 40 angeordnet, der abgesehen von zwei seitlichen Abflachungen die Wellenbohrung 3 ausfüllt. Seitliche Durchgangsbohrungen 41, 42 gehen von den besagten Abflachungen aus und durchsetzen auch die beiden kupplungsseitigen Anschlussstücke 36, 37. Damit ist eine freie Verbindung zwischen den Kühlkanälen 29, 30 und dem Raum zwischen den Kupferrohren 25 bzw. 26 hergestellt, durch welche auf die später noch zu beschreibende Weise Kühlgas durch besagte Kühlkanäle geleitet werden kann.

Die mit den Kupferrohren 25, 26 verbundenen Anschlussstücke 36, 37 können auch einstückig mit den Rohren 25, 26 ausgeführt sein, wie in Fig.3a beispielsweise verdeutlicht ist. Die Kupferrohre 25, 26 ragen dann mit ihren Enden 25a, 26a durch die Dichtplatte 43 hindurch. In das Rohrinnere eingelötete Einsätze 36b, 37b bewirken eine gasdichte Abdichtung des Rohrinneren und damit der Kühlkanäle 29, 30 gegenüber der Aussenwelt.

Die kupplungsseitigen Anschlussstücke 36, 37 bzw. die (verschlossenen) Rohrenden 25a, 26a ragen auf der kupplungsseitigen Stirnfläche des Isolierkörpers 40 heraus. Ihre Enden 36a, 37a bzw. 25a, 26a durchdringen eine metallische, kreisscheibenförmige Dichtplatte 43, die sie axial ebenfalls überragen. Ueber die besagten Enden der Anschlussstücke 36, 37 bzw. Rohrenden 25a, 26a geschobene Isolierrohre 44, 45 isolieren diese von der metallischen Dichtplatte 43.

Wie aus Fig.2 hervorgeht, ist die Stirnseite der Welle 1 mit einer gestuften Ausdrehung 46 versehen. Die Dichtplatte 43 ist in die hintere kreisrunde Ausdrehung 46a mittels Schrauben 47 eingeschraubt. Die vordere Ausdrehung 46b dient der Aufnahme der nicht weiter dargestellten elektrischen Kupplung der Erregerleiter 4 und 5 bzw. 4a und 5a.

Zur gasdichten Abdichtung der Dichtplatte 43 gegenüber der Welle sind in der bolzenseitigen Stirnfläche der Dichtplatte 43 zwei konzentrische Ringnuten 48, 49 vorgesehen, in welche Dichtringe 50 bzw. 51, sogenannte O-Ringe, eingelegt sind. Die Abdichtunge der aus dem Isolierkörper 40 herausragenden Enden 36a, 37a der kupplungsseitigen Anschlussstücke 36 bzw. 37bzw. die Rohrenden 25a, 26a gegenüber den Isolierrohren 44 bzw. 45 und auch die Abdichtung der Isolierrohre 45 und 45 gegenüber der Dichtplatte 43 erfolgt gleichfalls über paarweise angeordnete Dichtringe 52, 53 und 54, 55 bzw. 56, 57 und 58, 59. Dabei liegen die Dichtringe 52 bis 55 je in Ringnuten in den Enden 36a und 37a der Anschlussstücke 36, 37 bzw. der Rohrenden 25a, 26a; die Dichtringe 56 bis 59 liegen in Ringnuten in der Innenwand der zwei axialen Durchgangsbohrungen in der Dichtplatte 43.

Alle Dichtflächen sind entweder plane Flächen oder kreisrund und lassen sich mit einfachen Mitteln zuverlässig abdichten. Wie aus Fig.3 deutlich zu erkennen ist, kann auf diese Weise ein perfekte Abdichtung der Wellenbohrung 3 gegenüber der Kupplung erzielt werden. Die beschriebene Konstruktion erlaubt darüber hinaus eine einfache Demontage der Erregerleitung: Nach Trennen der beiden Kupplungshälften 17, 18 und Lösen der Schrauben 47 und Demontage der Zuleitungsbolzen 7, 8 kann die gesamte Erregerleitung ohne weiteres aus der Wellenbohrung herausgezogen werden.

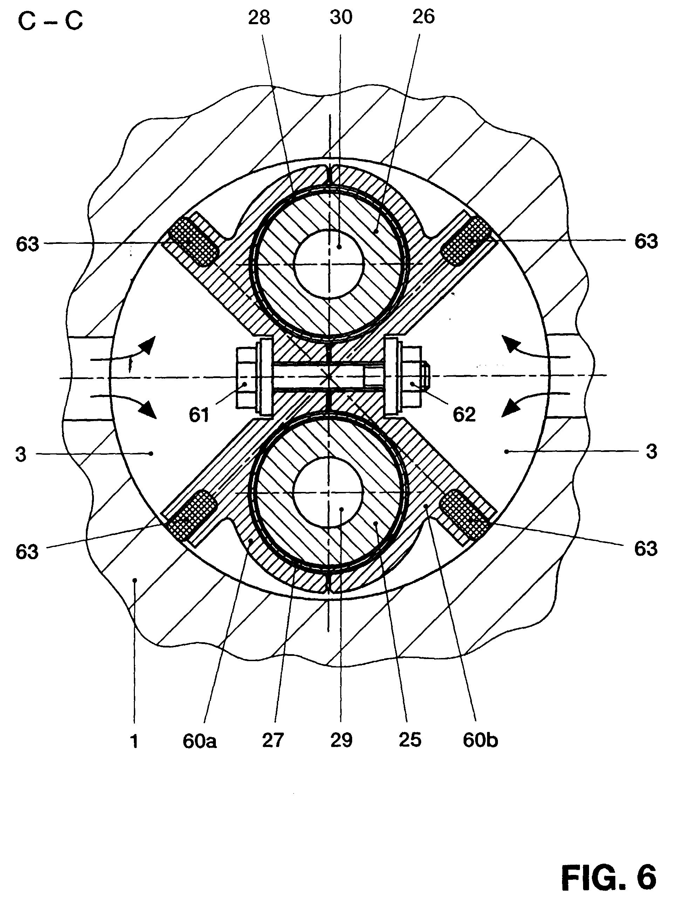

Wie aus Fig.2 und noch besser aus dem Querschnitt durch den mittleren Abbschnitt der Wellenbohrung 3 gemäss Fig.6 hervorgeht, sind die Erregerstromleiter (Kupferrrohre 25 und 26) dort gegen Fliehkrafteinwirkung abgestützt und zentriert. Zu diesem Zweck ist ein zweiteiliger X-förmiger Aluminiumkörper 60, bestehend aus den Hälften 60a und 60b in die Wellenbohrung 3 eingesetzt. Die beiden Hälften sind mit Bolzen 61 und Mutter 62 miteinander verschraubt, wobei gleichzeitig die (isolierten) Kupferrohre 25 und 26 gehalten werden. Um Reibungskorrosion zwischen dem Aluminiumkörper 60 und der Wandung der Wellenbohrung 3 zu vermeiden, sind axial verlaufende Nuten in die Schenkelenden eingearbeitet, in welche Nuten Kunststoffstreifen 63 eingelegt sind.

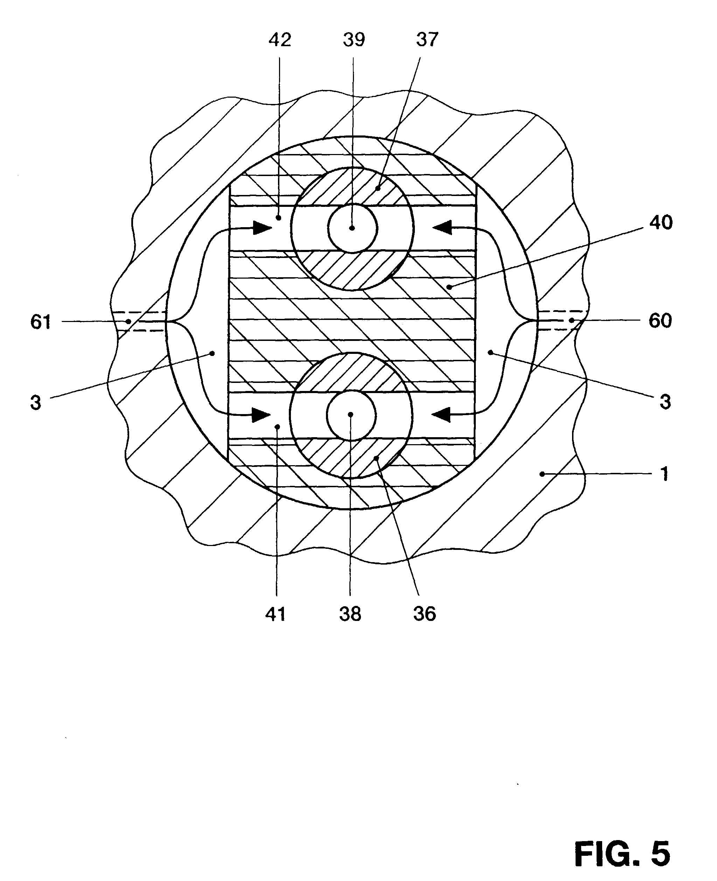

Der vorgeschlagene Aufbau der Erregerleitung ermöglicht ferner auch unter Verwendung von Kupferrohren 25, 26 mit Kreisquerschnitt eine optimale Kühlung dieser hohe Ströme führenden Leiter. Kühlgas aus dem Ausströmraum hinter dem Ventilator 22, genauer aus einer Kaltgaskammer unter dem Rotorwickelkopf wird über Kanäle 60, 61 (Fig.5) in die Wellenbohrung 9 geführt und strömt dort im Raum zwischen deren Wandung und den (isolierten) Kupferrohren 25, 26 zu den kupplungsseitigen Anschlussstücken 36 bzw. 37. Dort tritt es über die seitlichen Bohrungen 41, 42 in das Innere der Kupferrohre 25 und 26 ein, durchströmt diese und verlässt den Rotor wieder via den Bohrungen in den bolzenseitigen Anschlusstücken 31 bzw. 32 und die radialen Wellenbohrungen 7a ,8a für die Zuleitungsbolzen 7, 8 in die gleichfalls unter dem Rotorwickelkopf liegende Heissgaskammer. Die Anordnung dieser Kalt- bzw. Heissgaskammern ist in der EP-A-0 547 360 bzw. der inhaltsgleichen U.S. Patentanmeldung 07/988,192 vom 9.12.1992 der Anmelderin ausführlich beschrieben, auf welche hiermit ausdrücklich Bezug genommen wird. Wesentlich ist dabei, dass eine Druckdifferenz vorhanden ist, so dass eine Strömung stattfindet.

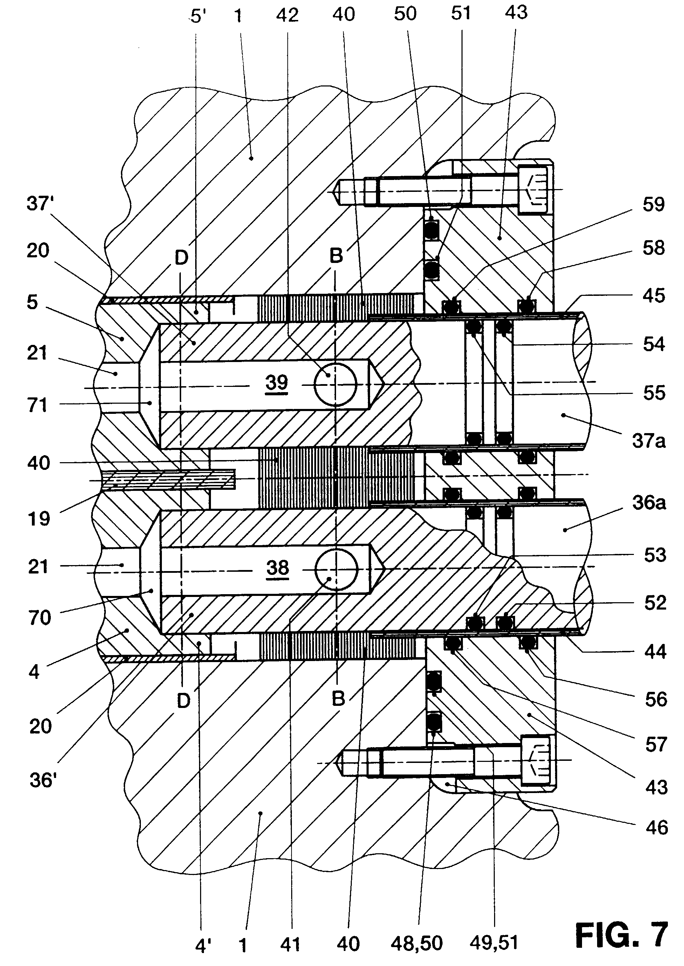

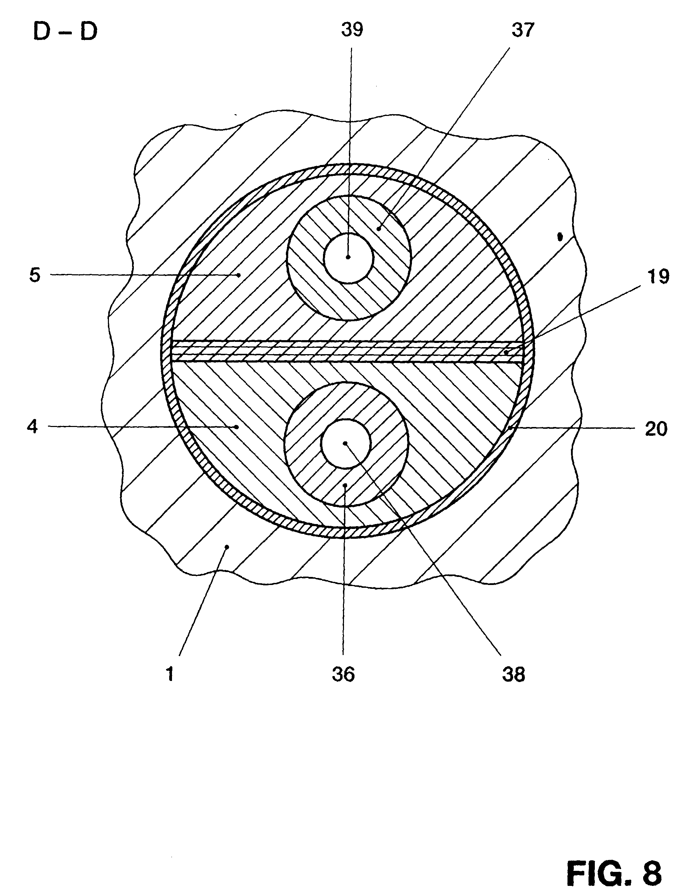

Neben der bevorzugten Ausführungsform mit Erregerleitern, die als Rohre mit Kreisquerschnitt ausgeführt sind, lässt sich die Erfindung auch bei Erregerleitern mit halbkreisförmigem Querschnitt verwirklichen. Dies ist den Figuren 7 und 8, in denen gleiche bzw. gleichwirkende Teile mit denselben Bezugszeichen versehen sind wie in den Figuren 1 bis 6, beispielsweise veranschaulicht.

Die kupplungsseitigen Enden 4' und 5' der Erregerleiter 4 bzw. 5 sind mit bolzenförmigen Uebergangsstücken 36' bzw. 37' versehen, welche den Anschlussstücken 36 und 37 der in Fig.2 und 3 dargestellten Ausführung entsprechen. Diese sind in Bohrungen 70, 71 in den Stirnseiten der Erregerstromleiterenden 4', 5' eingelötet oder eingeschraubt. Die Bohrungen 38 und 39 in den Uebergangsstücken 36' und 37' fluchten mit den Kühlkanälen 21 in den Erregerstromleitern 4 bzw. 5. Die Abdichtung der Uebergangsstücke 36' und 37' in der Dichtplatte 43 und die Abdichtung der Dichtplatte 43 gegenüber der Welle 1 erfolgt in genau der selben Weise, wie es im Zusammenhang mit Fig.2 bis 5 geschildert wurde. Anstelle von bolzenförmigen Uebergangsstücken 36', 37' können die Enden 4' und 5' der Erregerstromleiter 4 und 5 auch mit einem Zapfen versehen werden, der einstückig mit den Erregerstromleitern 4 und 5 ausgebildet ist. Auch kann der Isolierkörper 40 bei dieser Variante entfallen.

### BEZEICHNUNGSLISTE

- 1: Rotorwelle
- 2: Rotor
- 3: zentrale Wellenbohrung in 1
- 4,4',5,5': Erregerstromleiter
- 4a,5a: Erregerstromleiter zu den Schleifringen
- 6: Rotorwicklung
- 7,8: erste Zuleitungsbolzen
- 7a,8a: radiale Wellenbohrungen in 1
- 9,10: Verbindungsleiter zwischen 6 und 7 bzw. 8
- 11,12: zweite Zuleitungsbolzen
- 11a,12a: radiale Wellenbohrungen in 15
- 13,14: Schleifringe
- 15: Wellenstummel
- 16: Kupplung
- 17,18: Kupplungshälften von 16
- 19: Isolation zwischen 4 und 5 bzw. 4a und 5a
- 20: Isolation zwischen 4,5 bzw. 4a,5a und 1 bzw. 15
- 21: Kühlkanäle in 4 bzw. 5
- 22: Axialventilator
- 23: Lagerstelle von 1
- 24: Lagerstelle von 15
- 25,26: Kupferrohre
- 25a,26a: Enden von 25 bzw. 26
- 27,28: Isolierrohre
- 29,30: Kühlkanäle in 25 bzw. 26
- 31,32: bolzenseitige Anschlussstücke
- 31a,32a: Bohrungen in 31 bzw. 32
- 33: Isolierplatte
- 34,35: Isolierrohre
- 36,37: kupplungsseitige Anschlüssstücke
- 36a,37a: freie Enden von 36 bzw. 37
- 36b,37b: Einsätze in 25a bzw. 26a
- 36',37': bolzenförmige Uebergangsstücke
- 38,39: Sacklochbohrungen in 36 bzw. 37
- 40: Isolierkörper
- 41,42: seitliche Durchgangsbohrungen in 36,37 bzw. 40
- 43: Dichtplatte
- 44,45: Isolierrohre
- 46: gestufte Ausdrehung an 1
- 47: Schrauben
- 48,49: Ringnuten in 43
- 50-59: O-Ringe
- 60: zweiteiliger Aluminiumkörper
- 60a,60b: Hälften von 60
- 61: Schraube
- 62: Mutter
- 63: Kunststoffleisten
- 70,71: Bohrungen in 4' bzw. 5'

## Patentansprüche

1. Erregerstromleitung in der zentralen Wellenbohrung (3) im Rotor einer elektrischen Maschine, insbesondere Turbogenerator, zur Verbindung der zentral im Rotor axial verlaufenden paarweise angeordneten und mit einem Kühlkanal in Leiterlängsrichtung versehenen Erregerstromleiter (4,5) mit radial in der Rotorwelle (1) angeordneten Stromzuführungsbolzen (7,8) für die Rotorwicklung (6) einerseits und einer auf einem Wellenstummel (15) angeordneten Erregerstromquelle (13,14) andererseits, welcher Wellenstummel (15) am nichtantriebsseitigen Wellenende des Rotors (2) mittels einer lösbaren Kupplung (16) befestigt ist, dadurch gekennzeichnet, dass die kupplungsseitigen Enden der Erregerstromleiter (4,5) mit lungsseitigen Anschlussstücken (36,37;36',37') fest verbunden sind, dass besagte Anschlussstücke im wesentlichen kreisförmigen Querschnitt aufweisen und mit ihren Enden (36a,37a) axial verlaufende Durchgangsbohrungen in einer Dichtplatte (43) durchdringen und von dieser elektrisch isoliert sind, wobei die Dichtplatte (43) im Bereich der Kupplung (16) mit dem Wellenende verschraubt ist, und dass Mittel (50-59) zur gasdichten Abdichtung der Dichtplatte (43) gegenüber der Rotorwelle (1) und gegenüber den die Dichtplatte (43) durchdringenden Enden (36a,37a) der kupplungsseitigen Anschlussstücke vorgesehen sind.

2. Erregerstromleitung nach Anspruch 1, dadurch gekennzeichnet, dass in der zentralen Wellenbohrung (3) bolzenseitige Anschlussstücke (31,32) vorgesehen sind, in welchen besagte Stromzuführungsbolzen (7,8) lösbar befestigt sind, dass die Erregerstromleiter als metallische Rohre (25,26) mit kreisrundem Querschnitt ausgeführt und mit den bolzenseitigen Anschlussstücken (31,32) fest verbunden sind, dass diese Rohre am anderen Ende mit den kupplungsseitigen Anschlussstücken (36,37) fest verbunden sind und mit ihren Enden (36a,37a) die Dichtplatte (43) durchdringen.

3. Erregerstromleitung nach Anspruch 2, dadurch gekennzeichnet, dass die metallischen Rohre (25,26) mit den lungsseitigen Anschlussstücken (36,37) einstückig ausgebildet sind, wobei im Bereich der Dichtplatte (43) die metallischen Rohre durch Einsätze (36b,37b) gasdicht verschlossen sind.

4. Erregerstromleitung nach Anspruch 2 oder 3, dadurch gekennzeichnet, dass die kupplungsseitigen Enden der metallischen Rohre (25,26) bzw. die Anschlussstücke (36,37) in einem gemeinsamen Isolierkörper (40) gehalten sind, der abgesehen von zwei seitlichen Abflachungen die Wellenbohrung (3) vollständig ausfüllt.

5. Erregerstromleitung nach Anspruch 1, dadurch gekennzeichnet, dass die Erregerstromleiter (4,5) mit Ausnahme ihres kupplungsseitigen Endes halbkreisförmigen Querschnitt aufweisen, und dass die Stromzuführungsbolzen (7,8) für die Erregerwicklung unmittelbar in die Erregerstromleiter eingeschraubt sind.

6. Erregerstromleitung nach Anspruch 5, dadurch gekennzeichnet, dass die Erregerstromleiter am kupplungsseitigen Ende (4',5') ein Uebergangsstück (36',37') in Form eines kreiszylindrischen Zapfens aufweisen, welcher Zapfen als separates Bauteil mit den besagten Enden verbunden oder einstückig mit den Erregerstromleitern (4,5) ausgebildet ist

7. Erregerstromleitung nach Anspruch 2, 3 oder 4, dadurch gekennzeichnet, dass die bolzenseitigen Anschlussstücke (31,32) halbkreisförmigen Querschnitt aufweisen und gegenüber der Wellenbohrung (3) elektrisch isoliert sind, wobei sich beide Stücke mitsamt einer zwischen ihnen angeordneten Isolierplatte (33) zu einer Anordnung mit kreisförmigem Querschnitt ergänzen, mit einem Aussendurchmesser, der dem Innendurchmesser der Wellenbohrung (3) entspricht.

8. Erregerstromleitung nach einem der Ansprüche 2 bis 5, dadurch gekennzeichnet, dass die bolzenseitigen Anschlussstücke (31,32) mit Kanälen (31a,32a) versehen sind, und dass die kupplungsseitigen Anschlussstücke (36,37) mit Durchgangsbohrungen (41,42) versehen sind, welche auch den Isolierkörper (40) durchsetzen, so dass eine freie Verbindung von den Stromzuführungsbolzen (7,8) über das innere der metallischen Rohre (25,26) in den Raum zwischen die Wellenbohrung (3) und den besagten metallischen Rohren (25,26) hergestellt ist.

9. Erregerstromleitung nach einem der Ansprüche 1 bis 8, dadurch gekennzeichnet, in der bolzenseitigen Stirnfläche und in den axialen Durchgangsbohrungen der Dichtplatte (43) Ringnuten (48,49) vorgesehen sind, in welche Dichtringe (50,51 bzw. 56 bis 59) eingelegt sind.

10. Erregerstromleitung nach einem der Ansprüche 1 bis 9, dadurch gekennzeichnet, dass zur Isolierung der Enden (36a,37a) der kupplungsseitigen Anschlussstücke (36,37) Isolierrohre (44,45) vorgesehen sind, und dass dort die besagten Enden mit Ringnuten versehen sind, in welche Dichtringe (54,55) eingelegt sind.

## Claims

1. Exciter current line in the central shaft bore (3) in the rotor of an electric machine, in particular turbo generator, for connecting the exciter current conductors (4, 5) which are arranged centrally in pairs extending axially in the rotor and provided with a cooling channel in the longitudinal direction of the conductors to, on the one hand, current supply bolts (7, 8), arranged radially in the rotor shaft (1), for the rotor winding (6) and, on the other hand, an exciter current source (13, 14) which is arranged on a shaft stub (15) which is attached to the non-drive-side shaft end of the rotor (2) by means of a releasable coupling (16), characterized in that the coupling-side ends of the exciter current conductors (4, 5) are permanently connected to coupling-side connection elements (36, 37; 36', 37), in that the said connection elements have an essentially circular cross-section and with their ends penetrate axially extending through-bores in a sealing plate (43) and are electrically insulated therefrom, the sealing plate (43) being screwed in the region of the coupling (16) to the shaft end, and in that means (50-59) for gas-tight sealing of the sealing plate (43) with respect to the rotor shaft (1) and with respect to the ends (36a, 37a), which penetrate the sealing plate (43), of the coupling-side connection elements are provided.

2. Exciter current line according to Claim 1, wherein bolt-side connection elements (31, 32) are provided in the central shaft bore (3), in which connection elements the said current supply bolts (7, 8) are releasably attached, in that the exciter current conductors are realized as metallic pipes (25, 26) with an orbicular cross-section and are permanently connected to the bolt-side connection elements (31, 32), in that these pipes are permanently connected at the other end to the coupling-side connection elements (36, 37) and penetrate the sealing plate (43) with their ends (36a, 37a).

3. Exciter current line according to Claim 2, characterized in that the metallic pipes (25, 26) are of integral construction with the coupling-side connection elements (36, 37), the metallic pipes being closed off in a gas-tight fashion in the area of the sealing plate (43) by inserts (36b, 37b).

4. Exciter current line according to Claim 2 or 3, characterized in that the coupling-side ends of the metallic pipes (25, 26) and the connection elements (36, 37) are secured in a common insulating element (40) which, apart from two lateral flattened portions, completely fills the shaft bore (3).

5. Exciter current line according to Claim 1, characterized in that the exciter current conductors (4, 5) have, with the exception of their coupling-side end, a semicircular cross-section, and in that the current supply bolts (7, 8) for the exciter winding are screwed directly into the exciter current conductors.

6. Exciter current line according to Claim 5, characterized in that the exciter current conductors have at the coupling-side end (4', 5') a junction element (36', 37') in the form of a circular cylindrical pin which is connected as a separate component to the said ends or is constructed to be integral with the exciter current conductors (4, 5).

7. Exciter current line according to Claim 2, 3 or 4, characterized in that the bolt-side connection elements (31, 32) have a semicircular cross-section and are electrically insulated with respect to the shaft bore (3), both elements complementing one another, together with an insulating plate (33) arranged between them, to form an arrangement with a circular cross-section with an external diameter which corresponds to the internal diameter of the shaft bore (3).

8. Exciter current line according to any one of Claims 2 to 5, characterized in that the bolt-side connection elements (31, 32) are provided with channels (31a, 32a), and in that the coupling-side connection elements (36, 37) are provided with through-bores (41, 42) which also penetrate the insulating element (40) so that a free connection is produced from the current supply bolts (7, 8) via the interior of the metallic pipes (25, 26) into the space between the shaft bore (3) and said metallic pipes (25, 26).

9. Exciter current line according to any one of Claims 1 to 8, characterized in that annular grooves (48, 49) in which sealing rings (50, 51 and 56 to 59) are inserted are provided in the bolt-side end face and in the axial through-bores of the sealing plate (43).

10. Exciter current line according to any one of Claims 1 to 9, characterized in that insulating pipes (44, 45) are provided for insulating the ends (36a, 37a) of the coupling-side connection elements (36, 37), and in that said ends are provided here with annular grooves in which sealing rings (54, 55) are inserted.

## Revendications

1. Conduit de courant d'excitation dans l'alésage central (3) de l'arbre dans le rotor d'une machine électrique, en particulier d'un turbogénérateur, pour le raccordement des conducteurs du courant d'excitation (4, 5) disposés par paires axialement au centre du rotor et pourvus d'un canal de refroidissement en direction longitudinale des conducteurs, avec des boulons d'arrivée du courant (7, 8) pour l'enroulement du rotor (6) disposés radialement dans l'arbre (1) du rotor d'une part et avec une source de courant d'excitation (13, 14) disposée sur un bout d'arbre (15) d'autre part, bout d'arbre (15) qui est fixé, au moyen d'un accouplement séparable (16), à l'extrémité de l'arbre du rotor (2) qui n'est pas située du côté du dispositif d'entraînement, caractérisé en ce que les extrémités des conducteurs du courant d'excitation (4, 5) situées du côté de l'accouplement sont rigidement assemblées à des pièces de raccordement (36, 37; 36', 37') situées du côté de l'accouplement, en ce que lesdites pièces de raccordement présentent une section essentiellement circulaire et traversent par leurs extrémités (36a, 37a) des trous de passage à orientation axiale dans une plaque d'étanchéité (43) et sont électriquement isolées de celle-ci, la plaque d'étanchéité (43) étant vissée à l'extrémité de l'arbre dans la région de l'accouplement (16), et en ce qu'il est prévu des moyens (50 - 59) pour rendre étanche au gaz la plaque d'étanchéité (43) par rapport à l'arbre (1) du rotor et par rapport aux extrémités (36a, 37a) des pièces de raccordement situées du côté de l'accouplement, qui traversent la plaque d'étanchéité (43).

2. Conduit de courant d'excitation suivant la revendication 1, caractérisé en ce qu'il est prévu dans l'alésage central (3) de l'arbre des pièces de raccordement (31, 32) situées du côté des boulons, dans lesquelles lesdits boulons d'arrivée du courant (7, 8) sont fixés de manière amovible, en ce que les conducteurs du courant d'excitation sont constitués par des tubes métalliques (25, 26) de section circulaire et sont rigidement assemblés aux pièces de raccordement (31, 32) situées du côté des boulons, en ce que ces tubes sont, à l'autre extrémité, rigidement assemblés aux pièces de raccordement (36, 37) situées du côté de l'accouplement et traversent par leurs extrémités (36a, 37a) la plaque d'étanchéité (43).

3. Conduit de courant d'excitation suivant la revendication 2, caractérisé en ce que les tubes métalliques (25, 26) sont réalisés d'une seule pièce avec les pièces de raccordement (36, 37) situées du côté de l'accouplement, les tubes métalliques étant obturés de façon étanche au gaz par des pièces insérées (36b, 37b), dans la région de la plaque d'étanchéité (43).

4. Conduit de courant d'excitation suivant la revendication 2 ou 3, caractérisé en ce que les extrémités des tubes métalliques (25, 26), respectivement les pièces de raccordement (36, 37), situées du côté de l'accouplement sont maintenues dans un corps isolant (40) commun qui, à l'exception de deux méplats latéraux, remplit entièrement l'alésage (3) de l'arbre.

5. Conduit de courant d'excitation suivant la revendication 1, caractérisé en ce que les conducteurs du courant d'excitation (4, 5) présentent une section transversale semi-circulaire, à l'exception de leur extrémité située du côté de l'accouplement, et en ce que les boulons d'arrivée de courant (7, 8) pour la bobine d'excitation sont vissés directement dans les conducteurs du courant d'excitation.

6. Conduit de courant d'excitation suivant la revendication 5, caractérisé en ce que les conducteurs du courant d'excitation présentent, à leur extrémité (4', 5') située du côté de l'accouplement, une pièce de transition (36', 37') sous la forme d'un tourillon cylindrique circulaire, tourillon qui est constitué par un composant séparé assemblé auxdites extrémités ou est réalisé d'une seule pièce avec les conducteurs du courant d'excitation (4, 5).

7. Conduit de courant d'excitation suivant la revendication 2, 3 ou 4, caractérisé en ce que les pièces de raccordement (31, 32) situées du côté des boulons présentent une section transversale semi-circulaire et sont électriquement isolées par rapport à l'alésage (3) de l'arbre, les deux pièces se complétant, avec une plaque isolante (33) disposée entre elles, en une disposition de section transversale circulaire, avec un diamètre extérieur qui correspond au diamètre intérieur de l'alésage (3) de l'arbre.

8. Conduit de courant d'excitation suivant l'une quelconque des revendications 2 à 5, caractérisé en ce que les pièces de raccordement (31, 32) situées du côté des boulons sont pourvues de canaux (31a, 32a), et en ce que les pièces de raccordement (36, 37) situées du côté de l'accouplement sont pourvues de trous de passage (41, 42), qui traversent également le corps isolant (40), de façon telle qu'il s'établisse une communication libre depuis les boulons d'arrivée de courant (7, 8) par l'intérieur des tubes métalliques (25, 26) jusque dans la chambre située entre l'alésage (3) de l'arbre et lesdits tubes métalliques (25, 26).

9. Conduit de courant d'excitation suivant l'une quelconque des revendications 1 à 8, caractérisé en ce qu'il est prévu, dans la face frontale située du côté des boulons et dans les trous de passage axiaux de la plaque d'étanchéité (43), des rainures annulaires (48, 49) dans lesquelles sont posées des bagues d'étanchéité (50, 51 respectivement 56 à 59).

10. Conduit de courant d'excitation suivant l'une quelconque des revendications 1 à 9, caractérisé en ce qu'il est prévu des tubes isolants (44, 45) pour l'isolation des extrémités (36a, 37a) des pièces de raccordement (36, 37) situées du côté de l'accouplement, et en ce que lesdites extrémités y sont pourvues de rainures annulaires dans lesquelles sont posées des bagues d'étanchéité (54, 55).
